# EUROPEAN PATENT APPLICATION

(11) **EP 2 676 580 A1**
(43) Date of publication of application: **25.12.2013**
(21) Application number: 13003082.8
(22) Date of filing: 17.06.2013
(51) Int. Cl.: A47J 31/36, A47J 31/38, A47J 31/44

(54) **A quick loading and unloading device for extraction from a material bag**

(30) Priority: 18.06.2012 CN 201220288676 U
(71) Applicant: Tsann Kuen (Zhangzhou) Enterprise Co., Ltd., Fujian (CN)
(72) Inventor: Zhang, Yanxiang, Fujian (CN); Zhong, Weijun, Fujiian (CN)
(74) Representative: Verscht, Thomas Kurt Albert

(57) **Abstract**

The present invention is provided with a quick loading and unloading device of extraction material bag, which comprising a base (10), a rotating frame and a cover, the top of base is disposed with a container (11) to accommodate the extraction material bag (80); the rotating frame (20) is cooperated to the upper of the base by a horizontal shaft (50); the free end of the rotating frame is disposed with a clipping joint (21) to clip the material bag; a slideway (22) is disposed besides the clipping joint to let the material bag to fall down when the rotating frame is lifed; and the cover (30) is mounted on the rotating frame, the cover is movably cooperated with the horizontal shaft; the cover is disposed with a handle (31) to lift the cover and a lock mechanism (40) to lock the cover to the base; the lock mechanism is disposed with a lock bolt (42) to release the lock of the cover to the base when the lock mechanism is lifted by the handle; thereinto, the cover is disposed with a draw bar (24) to lift the rotating frame up when the cover is lifted up. The material bag is manually unloaded or automatically unloaded by the loose-leaf like structure of the cover and the rotating frame up of the base, it's easy to operate by single handle, benefit to the quick switch of the material bag, meanwhile, operator needn't to frequently contact the material bag after extraction with high temperature, making it with high security.

## Description

### Field of the invention

The present invention relates to a structure of drink equipment, especially to a quick loading and unloading device of extraction material bag.

### Background of the invention

Some drink is extracted from the material, such as coffee and tea. The remains have to be collected and dropped away after the material is extracted. In a long history, especially in personal or family environment, it requires humidity amounts, temperature and time in the extraction work; and after a serious of steps, the ingredient of the material is extracted and dissolved in the water to obtain the drink.

With the development of the life demand and the trends of fast rhythm, as the traditional extraction process takes too much time, making it difficult to get traditional drink in a limited period of time, the extraction process improves. With the improvement of the equipment to realize quick and accurate extraction process, the preparation and the consumption time of extraction process are reduced, people get drink more rapidly. Especially, the raw material will be grinded, mixed and rationed in advance, it only needs to be extracted at a proper time; improved, this kind of raw material is packed in a special box for automatically extraction with corresponding equipment, making the extraction process more rapid and simpler to the greatest advantage.

For this purpose, to serve drink to more persons in a short period of time, it has to change the material bags many times in one machine; as the temperature of the extraction water is high, it requires more time to manually load or unload of material bag, and it could be worse that trouble or accident may happen.

### Summary of the invention

To solve the problems that the existing material bag extraction device is inconvenient to change, of low efficiency and low security, the present invention is provided with a quick loading and unloading device of extraction material bag. The technical proposal of the present invention is as below:
A quick loading and unloading device of extraction material bag comprising:
   A base, the top of which is disposed with a container to accommodate the extraction material bag;
   A rotating frame, which is cooperated to the upper of the base by a horizontal shaft; the free end of the rotating frame is disposed with a clipping joint to clip the material bag; a slideway is disposed besides the clipping joint to let the material bag to fall down when the rotating frame is lifted; and
   A cover, which is mounted on the rotating frame, the cover is movably cooperated with the horizontal shaft; the cover is disposed with a handle to lift the cover and a lock mechanism to lock the cover to the base; the lock mechanism is disposed with a lock bolt to release the lock of the cover to the base when the lock mechanism is lifted by the handle;
   Thereinto, the cover is disposed with a draw bar to lift the rotating frame up when the cover is lifted up at an angle; a drip pan is disposed in the cover in the position pointed at the container to output extraction liquid.

In another preferred embodiment, the handle is lying on the cover and movably cooperated to the cover by a horizontal handle shaft.

In another preferred embodiment, the lock mechanism includes a sliding frame, the sliding frame is cooperated to the cover in the horizontal direction in sliding way and fixed to the cover in the vertical direction; the handle shaft is disposed with a rotating arm synchronously rotating with the handle, the end of the rotating arm is disposed with a pin cooperated to the sliding frame; a first guide groove disposed in the sliding frame in the position coupled to the pin is disposed to change the circular motion of the rotary arm to horizontal lateral motion; the base is disposed with a lock catch to lock the lock bolt in the vertical direction.

In another preferred embodiment, the top of the lock catch is disposed with an upper guiding surface to guide the lock bolt to lateral move when the lock bolt is close in the vertical direction; and the sliding frame is disposed with a second guiding groove to let the sliding frame to horizontal lateral move to lock when the handle is not lifted; the second guiding groove is coupled to the pin.

In another preferred embodiment, a downthrown hole is disposed in the rotating fame between the slideway and the horizontal shaft, the aperture of the downthrown hole is larger than the maximum overall diameter of the material bag.

In another preferred embodiment, a hook is disposed in the end of the draw bar to lift the rotating frame up.

In another preferred embodiment, a torsional spring is threaded through the horizontal shaft to support to lift the cover; a draw spring is disposed between the rotating frame and the base to draw above two toward each other throughout.

The advantageous effects of the present invention are as below:
1. It can be seen that the material bag is manually unloaded or automatically unloaded by the loose-leaf like structure of the cover and the rotating frame up of the base, it's easy to operate by single handle, benefit to the quick switch of the material bag, meanwhile, operator needn't to frequently contact the material bag after extraction with high temperature, making it with high security.
2. With automatically unloading function, the equipment will not be polluted by the broken material bag, making the entire equipment clean.
3. With the upper guide surface and the second guide groove, the unlock of the lock bolt to the lock catch is simple, no operation backwards of the handle is needed, the lock is completed by only pressing the whole cover, which improves the efficiency of working cycle.

### Brief description of the drawings

The present invention will be further described with the drawings and embodiments.
Fig.1 illustrates the structure of the present invention in default closed state.
Fig.2 illustrates the structure of fig.1 in the first working state.
Fig.3 illustrates the structure of fig.1 in the second working state.
Fig.4 illustrates the structure of fig.1 in the third working state.
Fig.5 illustrates the partial enlargement view of the side view of the present invention.

### Detailed description of the embodiments

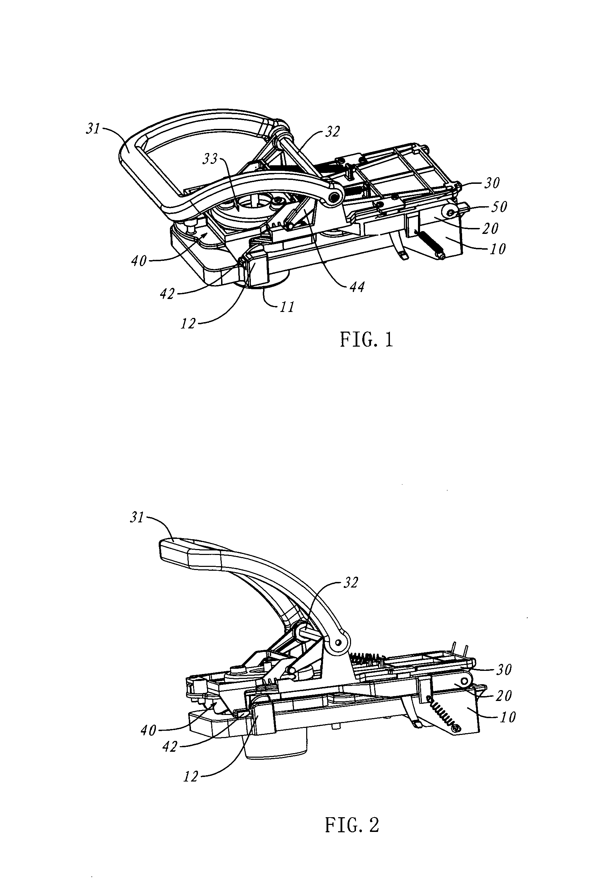

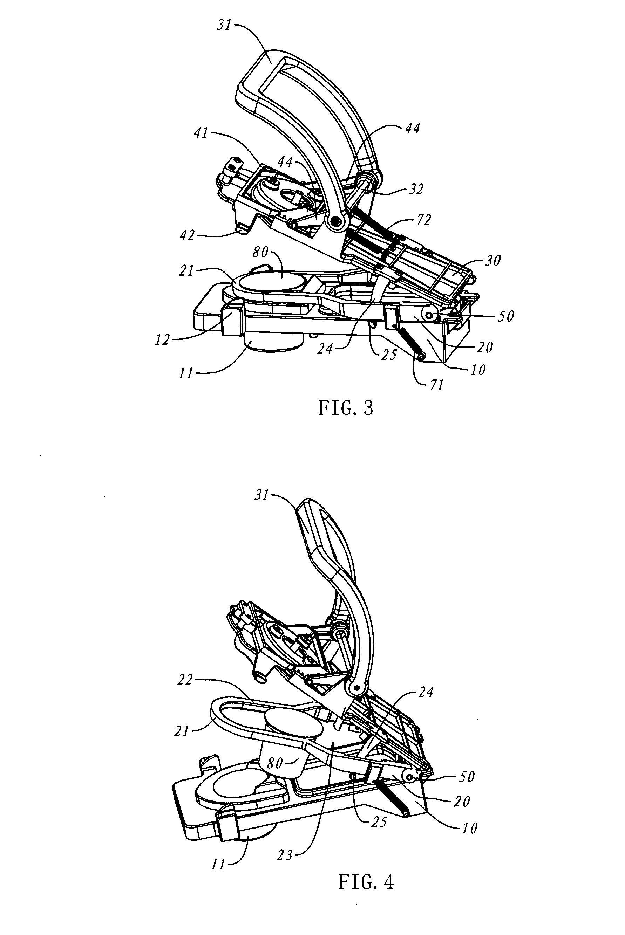

Fig.1 illustrates the structure of the embodiment of the present invention in default closed state; fig.2 is the fig.1 in the first working state; fig.3 is the fig.1 in the second working state, fig.4 is the fig.1 in the third working state. According to these four figures, the present invention will be described with a complete working circle.

A quick loading and unloading device of extraction material bag, assembled in extraction equipment, is disposed with a base 10. The base 10 is disposed with a container 11 to hold the extraction material bag 80.

A rotating frame 20 is disposed at the top of the base 10, the rotating frame 20 is cooperated in the upper of the base 10 by a horizontal shaft 50; the free end of the rotating frame 20 is disposed with a clipping joint 21 to clip the material bag 80; a slideway 22 is disposed besides the clipping joint 21; when the rotating frame 20 is lifted up, the material bag 80 can slide down along the slideway 22.

A cover 30 is mounted on the rotating frame 20. The cover 30 is movably cooperated to the horizontal shaft 50; the cover 30 is disposed with a handle 31, the cover 30 can be lifted up by the handle 31; the cover 30 is further disposed with a lock mechanism 40, the cover 30 is locked to the base 10 by the lock bolt 42 in the lock mechanism 40, the lock mechanism 40 is controlled by the handle 31, when the handle 31 is lifted up, the lock bolt 42 is controlled to unlock.

As figured in fig.1 of default closed state of this embodiment, the rotating frame 20 and the cover 30 are stacked, forming from layer-built shaped; the cover 30 is disposed with a drip pan 33 in the position corresponding to the container 11, the extraction liquid flows to the container 11 through the drip pan 33; the lying handle 31 is cooperated to the cover 30 by the horizontal handle shaft 32, and the handle shaft 32 is disposed with a rotating arm 44 synchronously rotating with the handle 31, the rotating arm 44 is disposed to control the lock mechanism 40; in this state, the lock bolt 42 of the lock mechanism 40 is locked by the lock catch 12 of the base; this default state is inactive state or normal extracting state.

As figured in fig.2 of second state of this embodiment, base on the default state of fig.1, lift up the handle 31 to control the sliding frame 41 of the lock mechanism 40 to slide relatively to the cover 30 by the symmetry rotating arm 44, then the lock bolt 42 is free from the limiting of the lock catch 12, at the same time, the cover 30 is still horizontally placed on above the rotating frame 20, the cover 30 and the rotating frame 20 are still lying on the base 10. The handle 31 is rotated 30° about the handle shaft 32 from the inactive state to this state. As figured in fig.3 of the second working state in fig.1, basic in the state of fig.2, the handle 31 is continued to lift up to make the cover 30 to lift up about the horizontal shaft 50, when the cover 30 is lifted up 25° relatively to the horizontal plane to unload the material bag 80, the draw bar 24 of the cover 30 is limited by the rotating frame 20 by the hook 25 in the end, the maximum rising angle of the cover 30 determined in this state is 25° ; in this embodiment, the horizontal shaft 50 is threaded by a compression spring to support the cover 30 to lift up (not figured out), so when the handle 31 is lifted and the lock bolt 42 is unlocked to the lock catch 12, the compression spring can support the cover 30 to keep on lift up, and with the limiting of the hook 25 of the draw bar 24, the state of fig.2 is kept. This state is called manual function state, the material bag 80 is loaded or unloaded manually, and base on this manual function state, the cover 30 can be pressed to turn to next working cycle.

As figured in fig.4 of the third working state of the fig.1, the third working state is obtained from the first working state of fig.2 by continuing lifting up the handle 31: lift up the handle 31 to make the rotating frame 20 lifted up by the hook 25 in the end of the draw bar 24 and the cover 30 is continued to lift up from 25° to 60° relatively to the horizontal plane. At this time, as the clipping joint 21 in the free end of the rotating frame 20 (the end away from the horizontal shaft 50) is clipped with the material bag 80, when the rotating frame 20 is lifted up, the material bag 80 reaches to highest position.

It can be seen that the material bag 80 is manually unloaded or automatically unloaded by the loose-leaf like structure of the cover 30 and the rotating frame 20 up of the base 10, it's easy to operate by single handle, benefit to the quick switch of the material bag 80, meanwhile, operator needn't to frequently contact the material bag 80 after extraction with high temperature, making it with high security. With automatically unloading function, the equipment will not be polluted by the broken material bag 80, making the entire equipment clean.

A slideway 22 is disposed besides the clipping joint 21, when the rotating frame 20 is lifted up, the material bag 80 slides along the slideway 22 to reach to a downthrown hole 23 between the slideway 22 of the rotating frame 20 and the horizontal shaft 50, the aperture of the downthrown hole 23 is larger than the maximum overall diameter of the material bag 80, so the material bag 80 can throw down of the downthrown hole 23.

The fig.3 of the second working state is called automatically unloading state, with the handle 31, the material bag 80 is lifted up by the rotating frame 20 and thrown down, realizing automatically unloading of the material bag 80, the operating path is simple and energy saving, and the material bag 80 is unloaded without hand touch, after unloading of the material bag 80 in fig.3, put down the handle 31 to make the rotating frame 20 restored to the layer-build state of fig.2, the material bag 80 can be quickly changed.

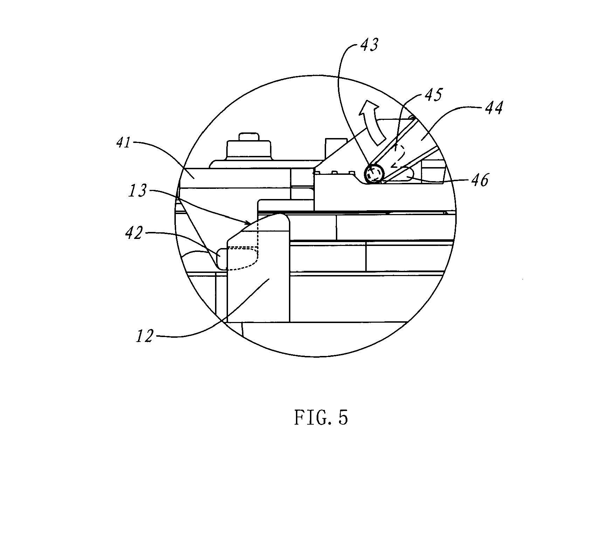

Basic in the fig.4, hold the handle to put down the cover 30, making the rotating frame 20 firstly lay on the base and situated in the state in the fig.3; then put the new material bag 80 to the container 11, and keep on putting down the cover 30 until the lock bolt 42 is restored and locked to the lock catch 12. The locking detail is as below:
As figured in fig.5 of a partial enlargement view of the side view of this embodiment, it mainly relates to the lock catch 12, lock bolt 42 and the sliding frame 41. An upper guide surface 13 is disposed at the top of the lock catch 12, the upper guide surface 13 is inclined relatively to the horizontal plane, the role of the upper guide surface 13 is to guide the lock bolt 42 to move laterally when the lock bolt 42 is close to the lock catch 12 from down to up, then the lock bolt 42 is avoided and locked again; the contact part of the lock bolt 42 and the upper guide surface 13 is inclined structure the same as the upper guide surface 13, making the lock bolt 42 guided and slided horizontally when the lock bolt 42 is pressed vertically to the upper guide surface 13 of the lock catch 12, the lock bolt 42 is finally locked to the lock catch 12 in the lower.

Besides, to couple to the easily locking structure of the lock catch 12 and the lock bolt 42, the sliding frame 41 is disposed with a first guide groove 45 and a second guide groove 46, two guide grooves are cooperated to the pin 43 in the end of the rotating arm 44; the first guide groove 45 is disposed to change the circular motion of the rotary arm 44, as the arrow direction figured in the fig.4, to horizontal lateral motion; the second guide groove 46 is disposed to coupled to the upper guide surface 13, the upper guide surface 13 guides the lock bolt 42 and the whole sliding frame 41 to avoid the influence of the pin 43 when the sliding frame 41 moves laterally. With the upper guide surface 13 and the second guide groove 46, the unlock of the lock bolt 42 to the lock catch 12 is simple, no operation backwards of the handle 31 is needed, the lock is completed by only pressing the whole cover 30.

Besides, as figured in fig.2, in this embodiment, a lower draw spring 72 is disposed between the rotating frame 20 and the base 10 to draw the above two towards each other throughout, the lower draw spring 72 makes the rotating frame 20 kept close in default state, the cover 30 is limited to upspring by the draw bar 24, the rotating frame 20 is quick restored after lifted up. An upper draw spring 71 is disposed between the sliding frame 41 and the cover 30 for automatically restoring.

The invention may be summarized as follows: The present invention is provided with a quick loading and unloading device of extraction material bag, which comprising a base, a rotating frame and a cover, the top of base is disposed with a container to accommodate the extraction material bag; the rotating frame is cooperated to the upper of the base by a horizontal shaft; the free end of the rotating frame is disposed with a clipping joint to clip the material bag; a slideway is disposed besides the clipping joint to let the material bag to fall down when the rotating frame is lifed; and the cover is mounted on the rotating frame, the cover is movably cooperated with the horizontal shaft; the cover is disposed with a handle to lift the cover and a lock mechanism to lock the cover to the base; the lock mechanism is disposed with a lock bolt to release the lock of the cover to the base when the lock mechanism is lifted by the handle; thereinto, the cover is disposed with a draw bar to lift the rotating frame up when the cover is lifted up. The material bag is manually unloaded or automatically unloaded by the loose-leaf like structure of the cover and the rotating frame up of the base, it's easy to operate by single handle, benefit to the quick switch of the material bag, meanwhile, operator needn't to frequently contact the material bag after extraction with high temperature, making it with high security.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A quick loading and unloading device of extraction material bag, wherein comprising:
A base, the top of which is disposed with a container to accommodate the extraction material bag;
A rotating frame, which is cooperated to the upper of the base by a horizontal shaft; the free end of the rotating frame is disposed with a clipping joint to clip the material bag; a slideway is disposed besides the clipping joint to let the material bag to fall down when the rotating frame is lifed; and
A cover, which is mounted on the rotating frame, the cover is movably cooperated with the horizontal shaft; the cover is disposed with a handle to lift the cover and a lock mechanism to lock the cover to the base; the lock mechanism is disposed with a lock bolt to release the lock of the cover to the base when the lock mechanism is lifted by the handle;
Thereinto, the cover is disposed with a draw bar to lift the rotating frame up when the cover is lifted up at an angle; a drip pan is disposed in the cover in the position pointed at the container to output extraction liquid.

2. A quick loading and unloading device of extraction material bag according to claim 1, wherein the handle is lying on the cover and movably cooperated to the cover by a horizontal handle shaft.

3. A quick loading and unloading device of extraction material bag according to claim 2, wherein the lock mechanism includes a sliding frame, the sliding frame is cooperated to the cover in the horizontal direction in sliding way and fixed to the cover in the vertical direction; the handle shaft is disposed with a rotating arm synchronously rotating with the handle, the end of the rotating arm is disposed with a pin cooperated to the sliding frame; a first guide groove disposed in the sliding frame in the position coupled to the pin is disposed to change the circular motion of the rotary arm to horizontal lateral motion; the base is disposed with a lock catch to lock the lock bolt in the vertical direction.

4. A quick loading and unloading device of extraction material bag according to claim 3, wherein the top of the lock catch is disposed with an upper guiding surface to guide the lock bolt to lateral move when the lock bolt is close in the vertical direction; and the sliding frame is disposed with a second guiding groove to let the sliding frame to horizontal lateral move to lock when the handle is not lifted; the second guiding groove is coupled to the pin.

5. A quick loading and unloading device of extraction material bag according to any one or more of the preceding claims, wherein a downthrown hole is disposed in the rotating fame between the slideway and the horizontal shaft, the aperture of the downthrown hole is larger than the maximum overall diameter of the material bag.

6. A quick loading and unloading device of extraction material bag according to any one or more of the preceding claims, wherein a hook is disposed in the end of the draw bar to lift the rotating frame up.

7. A quick loading and unloading device of extraction material bag according to any one or more of the preceding claims, wherein a torsional spring is threaded through the horizontal shaft to support to lift the cover; a draw spring is disposed between the rotating frame and the base to draw above two toward each other throughout.
